# NOUVEAU FASCICULE DE BREVET EUROPEEN

(11) **EP 3 273 201 B2**
(45) Date de publication et mention de la décision concernant l'opposition: **04.09.2024**
(45) Mention de la délivrance du brevet: 30.06.2021
(21) Numéro de dépôt: 17182421.2
(22) Date de dépôt: 20.07.2017
(51) Int. Cl.: G01C 21/00, G01C 21/20

(54) **METHODE DE CALCUL D'UN ITINERAIRE POUR UN ENGIN TOUT TERRAIN**
METHODE ZUR BERECHNUNG EINER FAHRSTRECKE FÜR GELÄNDEFAHRZEUG
METHOD OF CALCULATING AN ITINERARY FOR AN OFF-ROAD VEHICLE

(30) Priorité: 21.07.2016 FR 1656955
(43) Date de publication de la demande: 24.01.2018
(73) Titulaire: Arquus, 78000 Versailles (FR)
(72) Inventeur: DELOUMEAU, François, 75015 PARIS (FR)
(74) Mandataire: Lavoix

(56) Documents cités:
- EP-A1- 0 838 797
- EP-A1- 0 908 087
- EP-A1- 1 645 888
- EP-A2- 1 806 562
- WO-A1-03/038730
- WO-A1-2005/114110
- WO-A1-2007/141795
- WO-A1-2012/004553
- WO-A1-2012/051665
- WO-A1-2015/142166
- WO-A1-2015/180180
- WO-A2-2013/075072
- CN-A- 105 512 628
- DE-A1- 10 062 856
- DE-A1- 10 122 808
- DE-A1- 10 200 759
- DE-A1- 10 226 084
- DE-A1- 102005 024 868
- DE-A1- 102010 038 661
- DE-A1- 102011 078 292
- DE-A1- 102011 106 170
- DE-A1- 102014 205 040
- DE-A1- 102014 226 458
- DE-A1- 19 956 108
- DE-B3- 102013 019 098
- DE-B4- 102010 038 661
- FR-A3- 2 986 647
- GB-A- 2 334 102
- GB-A- 2 533 140
- JP-A- 2006 180 326
- JP-A- 2010 250 478
- JP-B2- S5 819 555
- US-A1- 2004 167 682
- US-A1- 2005 195 096
- US-A1- 2005 267 681
- US-A1- 2006 074 557
- US-A1- 2014 257 621
- US-A1- 2015 158 513
- US-A1- 2016 016 663
- US-A1- 2016 157 414
- US-A1- 2016 176 523
- US-B2- 6 487 500
- US-B2- 7 581 452
- US-B2- 8 108 142
- REDOUANE BOUMGHAR ET AL: "An information-driven navigation strategy for autonomous navigation in unknown environments", SAFETY, SECURITY, AND RESCUE ROBOTICS (SSRR), 2011 IEEE INTERNATIONAL SYMPOSIUM ON, IEEE, 1 November 2011 (2011-11-01), pages 172 - 177, XP032076663, ISBN: 978-1-61284-770-2, DOI: 10.1109/SSRR.2011.6106782
- ALONZO KELLY ET AL: "Toward Reliable Off Road Autonomous Vehicles Operating in Challenging Environments", INTERNATIONAL JOURNAL OF ROBOTICS RESEARCH., vol. 25, no. 5-6, 1 May 2006 (2006-05-01), US, pages 449 - 483, XP055371697, ISSN: 0278-3649, DOI: 10.1177/0278364906065543

## Description

L'invention concerne une méthode de calcul d'un itinéraire pour un engin tout terrain.

De manière connue, certains logiciels perfectionnés permettent d'établir un itinéraire entre un point de départ et un point d'arrivée à partir de données cartographiques, notamment à partir d'images satellites. Le logiciel commence par établir une zone de franchissement, ou « Geofence » en anglais, s'étendant entre le point de départ et le point d'arrivée. Cette zone définit tous les itinéraires possibles pour aller du point de départ au point d'arrivée. Les zones difficiles, voire impossibles à franchir, telles que les zones comportant des reliefs, de la végétation dense, ou les zones traversées par des fleuves, sont exclues de la zone de franchissement. Une fois la zone de franchissement établie, le logiciel calcule un itinéraire à suivre pour l'engin. Cet itinéraire est calculé pour faciliter au maximum le passage de l'engin. Cependant, cet itinéraire n'est pas forcément le plus court, ni celui qui présente le plus faible temps de parcours.

Les images satellites sont actualisées en moyenne à une fréquence de l'ordre quelques jours. Ainsi, les cartes établies à partir d'images satellites ne permettent pas d'identifier d'éventuels obstacles formés quelques heures avant le passage de l'engin, tels des éboulements sur la voie ou le débordement d'un cours d'eau, ni de prendre en compte certains évènements climatiques importants, comme une chute de neige. De plus, la précision des cartes ne permet pas d'identifier des obstacles tels qu'un arbre couché sur la voie. Enfin, les images satellites ne permettent pas de déterminer précisément les capacités de portance et d'adhérence. Souvent, ces capacités sont estimées à partir des indications pluviométriques dans la zone concernée.

Ce manque de précision des données cartographiques peut avoir pour effet que l'engin se retrouve coincé face à un obstacle non pris en compte lors de l'établissement de l'itinéraire. L'engin doit alors manœuvrer, et parfois faire demi-tour, pour contourner cet obstacle. Toutefois, ce type de manœuvre peut s'avérer délicate pour certains types d'engins selon leur capacité de manœuvrabilité. La manœuvre est d'autant plus compliquée lorsque l'itinéraire est suivi par un convoi de véhicules.

Pour pallier ces inconvénients, une solution consiste à équiper l'engin de capteurs de présence pour la détection d'obstacle. Toutefois, la portée de ces capteurs est souvent limitée par les masques naturels formés par le terrain (reliefs), ce qui ne permet pas d'anticiper suffisamment l'obstacle. L'obstacle est alors détecté au dernier moment. Les manœuvres de demi-tour précitées ne peuvent alors être évitées.

Une autre solution consiste à réaliser in situ des constats préalables relatifs à la topographie du terrain (présence d'un cours d'eau, d'un ravin, etc...), ainsi que des essais pénétrométriques sur tous les terrains traversés par l'itinéraire. Toutefois, cela impose de mobiliser beaucoup d'opérateurs, ce qui est long, couteux et inadapté aux zones à risques.

L'utilisation d'un véhicule de reconnaissance est connue en soi, notamment du document CN-A-105 282 517, dans lequel un drone est utilisé pour aider les pompiers sur une zone incendiée. Le drone est équipé de moyens permettant de surveiller la propagation de l'incendie, ce qui permet d'éviter que les pompiers se retrouvent encerclés par les flammes. D'autre part, US-A-2014 263 822 divulgue l'utilisation d'un drone pour l'agriculture. Ce drone est équipé de moyens de mesure avec lesquels il est possible d'estimer la teneur en eau des terres agricoles. Le drone permet ainsi de répertorier les zones plus humides, et les zones les plus arides nécessitant davantage d'irrigation.

Toutefois, aucun de ces deux documents ne divulgue l'utilisation d'un drone pour faciliter le passage d'un engin tout terrain.

La publication scientifique de Redouane Boumghar et al, dont le titre est : « An information-Driven Navigation Strategy for Autonomous Navigation in Unknown Environments », Proceedings of the 2011 IEEE International Symposium on Safety, Security and Rescue Robotics, Kyoto, Japan, propose une méthode dans laquelle un drone est utilisé pour faire de la reconnaissance de terrain de manière avancée par rapport à un véhicule autonome. Dans ce document, le drone est équipé de moyens de mesure embarqués lui permettant de détecter la présence d'un obstacle sur la trajectoire du véhicule. Le cas échéant, une nouvelle trajectoire est calculée pour éviter l'obstacle.

La méthode présentée dans ce document ne prend pas en compte la nature de l'obstacle. Ainsi, la trajectoire est modifiée même si le véhicule était a priori en mesure de franchir l'obstacle, ce qui engendre potentiellement une perte de temps et une augmentation du temps de trajet.

C'est à ces inconvénients qu'entend plus particulièrement remédier l'invention en proposant une nouvelle méthode de calcul d'un itinéraire pour un engin tout terrain, permettant de modifier l'itinéraire de façon plus intelligente en fonction de la nature du ou des obstacles détectés sur le passage de l'engin et donc de ne pas augmenter inutilement le temps de trajet.

A cet effet, l'invention concerne une méthode selon la revendication 1.

Grâce à l'invention, le véhicule de reconnaissance qui précède l'engin tout terrain peut détecter la présence d'un obstacle sur l'itinéraire de l'engin tout terrain qui n'avait pas identifié lors de l'établissement de l'itinéraire à partir des données cartographiques ou qui était trop petit pour être visible à partir d'images satellites. En outre, les capteurs embarqués sur le véhicule de reconnaissance permettent de déterminer avec davantage de précision les propriétés du terrain (portance, adhérence...) emprunté par l'itinéraire. Il est alors possible d'anticiper des difficultés de franchissement pour l'engin à certains endroits de l'itinéraire. C'est le cas par exemple lorsque l'engin est lourd et que le sol est meuble, ou encore lorsque la liaison châssis-sol de l'engin n'est pas adaptée pour des sols peu adhérents, comme des sols enneigés. Pour cela, l'itinéraire de l'engin pour parvenir jusqu'au point d'arrivée est modifié. Cette procédure d'actualisation de l'itinéraire peut être réitérée autant de fois que nécessaire en fonction du nombre d'obstacles identifiés par le véhicule de reconnaissance.

Selon des aspects avantageux mais non obligatoires de l'invention, la méthode de calcul d'itinéraire peut comporter une ou plusieurs des caractéristiques suivantes, prises dans toute combinaison techniquement admissible :
- Lors de l'étape c), le calculateur est utilisé pour déterminer si l'engin a des capacités de franchissement suffisantes pour suivre l'itinéraire avec une vitesse de franchissement supérieure ou égale à une valeur de vitesse seuil ou avec différentes vitesses de franchissement supérieures ou égales à au moins une valeur de vitesse seuil (le calculateur définit les vitesses de consigne de franchissement) et, à défaut, pour établir un nouvel itinéraire jusqu'au point d'arrivée à partir des données cartographiques et/ou des valeurs de paramètres relatifs à la traficabilité du terrain.
- Lors de l'étape a), les données cartographiques et/ou au moins un tracé d'itinéraire connu sont utilisés pour déterminer différentes vitesses de passage de l'engin tout au long de l'itinéraire.
- Plusieurs valeurs de vitesse seuil sont déterminées tout au long de l'itinéraire et chaque valeur de vitesse seuil est sensiblement égale à une vitesse de passage déterminée à l'étape a).
- Lors de l'étape c), le calculateur est utilisé pour déterminer si l'engin a des capacités de franchissement suffisantes pour suivre l'itinéraire avec des vitesses de franchissement supérieures ou égales aux différentes vitesses de passage de l'engin déterminées à partir des données cartographiques et/ou au moins un tracé d'itinéraire connu.
- L'engin tout terrain est également équipé de moyens de mesure embarqués, utilisés pour comparer les valeurs de paramètres relatifs à la traficabilité du terrain avec la traficabilité réelle du terrain.
- Lors de l'étape c), les valeurs de paramètres relatifs à la traficabilité du terrain sont pondérées avec un coefficient correcteur, calculé pour affiner la différence entre les valeurs de paramètres relatifs à la traficabilité du terrain et d'autres valeurs de paramètres relatifs à la traficabilité du terrain calculés à partir des mesures effectuées par les moyens de mesure embarqués sur l'engin tout terrain.
- Le coefficient correcteur est calculé à partir de données extraites sur au moins une ou plusieurs dizaines de trajets afin de corriger les mesures du véhicule de reconnaissance grâce à un retour d'expérience sur des trajets précédents.
- Le véhicule de reconnaissance sans personne à bord est un drone.
- Le calculateur est déporté de l'engin tout terrain et transmet le nouvel itinéraire à un système de GPS (Global Positioning system) embarqué sur l'engin.
- L'engin tout terrain se déplace de manière autonome.
- A l'étape a), l'itinéraire est établi à partir de données cartographiques et/ou au moins un tracé d'itinéraire connu.
- A l'étape a), l'itinéraire est établi à partir de points de cheminement définis par un utilisateur.
- L'itinéraire établi à l'étape a) est une droite reliant le point de départ et le point d'arrivée.
- Les valeurs de paramètres relatifs à la traficabilité du terrain incluent des caractéristiques morphologiques du terrain, comme par exemple la teneur en argile, la teneur en eau, ou encore la composition du sol et/ou des caractéristiques géométriques du terrain, comme par exemple les reliefs, les obstacles, ou encore la granulométrie et/ou des propriétés mécaniques du terrain, comme par exemple la portance ou l'adhérence.
- Le véhicule de reconnaissance est équipé de moyens de mesure embarqués, qui comprennent au moins les trois éléments suivants : une caméra hyper-spectrale pour déterminer le type de végétation au sol, un Lidar pour détecter les reliefs, et un géoradar pour évaluer la compacité du sol et le cône index (CI).

L'invention et d'autres avantages de celle-ci apparaitront plus clairement à la lumière de la description qui va suivre d'un mode de réalisation d'une méthode de calcul d'un itinéraire conforme à son principe, donnée uniquement à titre d'exemple et faite en référence aux figures annexées dans lesquelles :
- La figure 1 est un schéma représentant l'itinéraire initial d'un engin tout terrain E et la trajectoire réelle de l'engin E en fonction du ou des obstacles O détectés par un véhicule de reconnaissance D précédent l'engin tout terrain E sur tout l'itinéraire, et
- La figure 2 est un diagramme représentant les différentes étapes de la méthode de calcul d'itinéraire selon l'invention.

L'engin tout terrain E est capable de se déplacer dans tout type de terrain (route, piste, boue, sable, neige...). Il peut s'agir d'un véhicule terrestre à moteur (VTM) comme un véhicule incendie, un véhicule de secours (pompiers), un engin militaire, un engin de chantier ou encore un camion lourd. Il peut également s'agir d'un aéronef lors des phases de roulage, d'atterrissage et de décollage.

L'engin E peut être autonome. Dans ce cas, l'engin E se déplace automatiquement sans intervention humaine. En variante, l'engin peut être piloté par un chauffeur à bord ou commandé à distance. Dans le cas d'un engin avec chauffeur, l'itinéraire est alors simplement un itinéraire recommandé au chauffeur pour rallier le point d'arrivée.

L'invention s'applique également à un engin appartenant à un convoi de véhicules tout terrain, notamment au premier véhicule du convoi, chacun des autres véhicules suivant l'engin de devant.

La méthode de calcul d'itinéraire selon l'invention comprend une première étape consistant à établir un itinéraire I1 à suivre par l'engin E pour aller d'un point de départ A à un point d'arrivée B.

Le logiciel commence, lors d'une étape 100, par déterminer une zone de franchissement G, communément appelée « Geo-fence » en anglais, qui englobe toutes les trajectoires possibles que peut emprunter l'engin E pour aller du point A au point B sans difficulté. Les trajectoires hors de cette zone G sont donc les trajectoires qui ne peuvent pas être suivies par l'engin E, du moins pas dans un délai de temps raisonnable.

Une fois que la zone de franchissement G est établie, le logiciel calcule, lors d'une étape 102, l'itinéraire I1 en fonction du type d'engin et des critères de performance souhaités. Par exemple, l'itinéraire choisi I1 peut être l'itinéraire à moindre risque de franchissement, qui a pour avantage de limiter le risque de casse. L'itinéraire choisi I1 peut également être l'itinéraire à moindre temps de parcours, particulièrement adapté aux véhicules incendie ou aux véhicules de secours (pompiers). Il est aussi envisageable de calculer un itinéraire I1 à moindres sollicitations, ou secousses, notamment pour les véhicules de transport de produits ou d'équipements sensibles.

L'itinéraire I1 est établi par un logiciel dédié implémenté dans un calculateur non représenté. Le calculateur peut être embarqué ou non sur l'engin E. Dans le cas où le calculateur n'est pas embarqué sur l'engin E, le calculateur peut être commun à plusieurs engins et communique l'itinéraire à suivre au système GPS de chacun, par exemple par voie hertzienne.

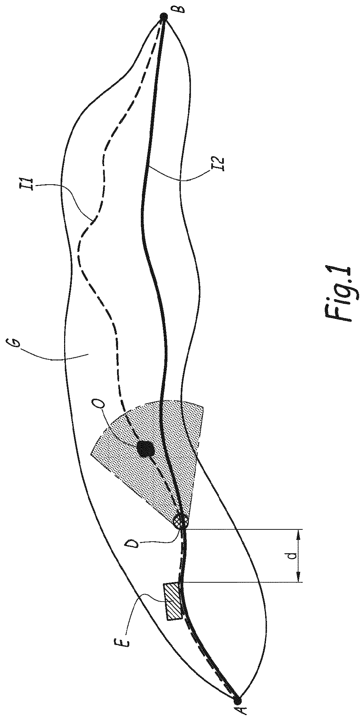

L'itinéraire I1 est représenté par la courbe en tirets sur la figure 1.

L'itinéraire I1 peut être aussi réalisé en déterminant des points intermédiaires de cheminement (« waypoints » en anglais)

L'itinéraire est établi essentiellement à partir de données cartographiques. On parle d'une analyse de terrain de niveau 1. Ces données cartographiques permettent de repérer, entre autres, les axes routiers, les constructions humaines, les reliefs, la végétation et les cours d'eau. Elles incluent notamment :
- les images satellites du type QUICKBIRD, LANDSAT ou MODIS (Radiomètre spectral pour imagerie de résolution moyenne),
- les cartographies préétablies, et
- les images prises par des avions ou des drones de haute altitude.

En variante, l'itinéraire I1 peut être établi à partir d'une balise mobile de géolocalisation portée par un autre engin ou par une personne. C'est notamment le cas lorsqu'il faut guider un engin sur un trajet déjà effectué précédemment, c'est-à-dire que l'on se sert d'un relevé antérieur sur la même zone. L'engin peut alors suivre le même itinéraire qu'un engin précédent pour aller d'un même point de départ A à un même point d'arrivée B. Les données fournies par une ou plusieurs balises de géolocalisation et les données cartographiques pourront également être utilisées de manière complémentaire.

Avantageusement, le calculateur établit également des vitesses de passage dans chaque zone traversée par l'itinéraire. Lorsque l'engin est conduit par un chauffeur, ces vitesses de passage sont simplement des vitesses recommandées. En revanche, dans le cas d'un engin autonome, la vitesse de l'engin est ajustée automatiquement en fonction du terrain emprunté tout au long de l'itinéraire. Effectivement, l'engin n'ira pas aussi vite sur une piste de forêt enneigée que sur un axe routier par exemple. Dans l'exemple, les différentes vitesses de passage de l'engin E tout au long de l'itinéraire I1 sont déterminées à partir de données cartographiques et/ou au moins un tracé d'itinéraire connu.

D'autres réglages peuvent être effectués automatiquement sur l'engin en fonction des conditions de terrain. Il peut s'agir notamment :
- du rapport de la boite de vitesse,
- du rapport de la boite de transfert,
- du blocage sélectif des différentiels du pont avant et/ou arrière (crabotage des ponts),
- de la pression des pneumatiques (via un système de télégonflage du type « Central Tire Inflation System » (CTIS)), etc...

Pendant tout le trajet entre le point A et le point B, l'engin E est précédé par un véhicule de reconnaissance sans personne à bord du type autonome ou du type commandé à distance. Si le véhicule de reconnaissance est de type autonome, il se déplace automatiquement sans intervention humaine. Dans l'exemple, le véhicule de reconnaissance est un drone D mais on peut imaginer, en variante, un véhicule de reconnaissance sous forme de véhicule terrestre à moteur. Dans ce dernier cas, le véhicule de reconnaissance présente alors une haute capacité de franchissement, c'est-à-dire qu'il peut franchir tout type de sol (meuble, enneigé, boueux, etc...) sans difficultés, comparé à l'engin E. Par exemple, ce véhicule de reconnaissance terrestre peut être prévu très léger.

L'avantage d'utiliser un véhicule de reconnaissance tel qu'un drone est que, à la différence d'un véhicule terrestre, la portée des moyens de mesure embarqués sur le drone n'est pas ou peu limitée par les reliefs du terrain (masques naturels).

La distance d qui sépare le véhicule de reconnaissance D et l'engin E peut être paramétrée : elle est fonction de la vitesse d'avancement de l'engin et du temps de calcul d'itinéraire. Préférentiellement, elle est d'au moins 150m, ce qui correspond à un temps de retard pour l'engin d'au moins 18 secondes, en considérant que ce dernier évolue à moins de 60 km/h.

Elle est dans l'exemple de 300m, ce qui correspond à un temps de retard pour l'engin de 36s, en considérant que ce dernier évolue à 30 km/h.

Le véhicule de reconnaissance D est muni d'une balise GPS (Global positioning System) et de moyens de communication avec l'engin E. Avantageusement, ces moyens de communication incluent un émetteur d'ondes hertziennes.

Le véhicule de reconnaissance D est équipé de moyens de mesure embarqués, qui comprennent au moins les trois éléments suivants :
- une caméra hyper-spectrale,
- un Lidar,
- un géoradar,

La caméra hyper-spectrale est utilisée pour déterminer le type de végétation au sol, le Lidar (radar laser) est utilisé pour détecter les reliefs et le géoradar est utilisé pour évaluer la compacité du sol et le cône index (Cl).

Avantageusement, les moyens de mesure comprennent en outre au moins l'un des éléments suivants :
- un radar,
- une caméra vidéo,
- une caméra stéréo,
- une centrale inertielle,
- une caméra thermique, avec laquelle il est possible d'évaluer la température du sol et d'identifier des zones enneigées, ou verglacées.

La portée de ces moyens de mesure embarqués combinée à la capacité de couverture de zone du véhicule de reconnaissance permettent de relever des données dans un cône qui est dirigé avec un angle d'environ 45° par rapport à la verticale et qui présente une hauteur d'environ 600m de hauteur et une base de 1200m de largeur. Toutefois, la portée de mesure peut être différente en fonction du type de matériel utilisé. De même, la précision des moyens de mesure peut être adaptée en fonction du besoin.

Avantageusement, le véhicule de reconnaissance D se déplace de manière que son cône de mesure reste axé sur la trajectoire à suivre par l'engin E, c'est-à-dire que le véhicule de reconnaissance se déplace de manière que l'axe de son cône de mesure reste sensiblement tangent à la trajectoire prévue.

Les données M collectées, lors d'une étape 200, par les moyens de mesure embarqués sur le véhicule de reconnaissance D sont transmises en temps réel au calculateur, c'est-à-dire de manière dynamique. Le calculateur calcule alors, lors d'une étape 202, des valeurs de paramètres P relatifs à la traficabilité du terrain à partir des mesures M effectuées par le véhicule de reconnaissance D.

Les valeurs de paramètres P relatifs à la traficabilité du terrain concernent la portion d'itinéraire s'étendant sur environ 600 m située à environ 300 m devant l'engin E. Ces valeurs de paramètres P incluent des caractéristiques morphologiques du terrain (teneur en argile, teneur en eau, composition du sol, etc...), et/ou des caractéristiques géométriques du terrain (relief, obstacles, granulométrie, etc...) et/ou des propriétés mécaniques du terrain (portance, adhérence, etc...). En particulier, les données M collectées par le véhicule de reconnaissance permettent de détecter la présence d'un obstacle O sur la portion d'itinéraire I1, cet obstacle n'étant pas visible à partir des images satellites. On parle d'un Modèle Numérique de Terrain Dynamique (MNT-D) correspondant à une analyse de terrain de niveau 2 (cartographie locale de traficabilité précise). Par ailleurs, si le terrain est une route, le calculateur est capable d'estimer, à partir des valeurs relevées par le véhicule de reconnaissance D, l'état du revêtement.

Préférentiellement, le modèle numérique de terrain dynamique (MNT-D) permet d'établir une zone de franchissement d'itinéraire dynamique, ou plus couramment appelée « Geo-fence dynamique d'itinéraire ».

Dans l'exemple, le calculateur comprend une mémoire dans laquelle est stocké au moins un paramètre représentatif des capacités de franchissement C de l'engin tout terrain E suivant l'itinéraire. En particulier, au moins l'un des paramètres suivants est stocké dans la mémoire du calculateur :
- la nature de l'engin (camion de transport, aéronef, engin militaire, etc...),
- le facteur de masse,
- le facteur de charge à la roue,
- le facteur "de crampon",
- le facteur de garde au sol,
- le facteur de motorisation,
- le facteur de traction,
- le facteur de transmission,
- le poids total en charge,
- la charge à l'essieu,
- le nombre d'essieux,
- la garde au sol minimum,
- le nombre de pneumatiques par essieu,
- le diamètre extérieur du pneumatique, gonflé, sans charge
- la largeur du pneu, gonflé, sans charge
- la hauteur de la section du pneumatique, gonflé, sans charge,
- le facteur de Correction de Déflexion,
- la déflexion du pneumatique sur surface dure,
- l'indice de Mobilité,
- le facteur de Dégagement,
- le facteur de Pression de Contact,
- l'indice de Cône Véhicule - un passage,
- l'indice de Cône Véhicule - 50 passages,
- la pression Maximum Moyenne par Maclaurin,
- la pression Maximum Moyenne par Rowland,
- le type de motricité (roues, chenilles) et le nombre de roues motrices le cas échéant (4x4, 6x8...),
- les dimensions de l'engin (longueur, largeur, hauteur, garde au sol, etc...),
- le couple à la roue en fonction de la vitesse,
- les empattements,
- les voies,
- l'angle d'attaque, l'angle de fuite, l'angle de crête,
- la hauteur de franchissement de marche,
- la hauteur de franchissement de muret étroit,
- la profondeur maximale de gués,
- l'aptitude en dévers,
- les caractéristiques des suspensions,
- les caractéristiques du guidage des trains.

Ensuite, le calculateur compare les valeurs de paramètres P relatifs à la traficabilité du terrain avec les capacités C de franchissement de l'engin E et détermine, lors d'une étape 204, si l'engin tout terrain E est capable de suivre l'itinéraire I1, lequel est imposé pour un engin autonome, mais seulement recommandé pour un engin avec chauffeur. Cette comparaison est effectuée par un programme d'ordinateur préenregistré dans le calculateur. Ce programme d'ordinateur a pour paramètres d'entrée les valeurs de paramètres P relatifs à la traficabilité du terrain et les capacités C de franchissement de l'engin et permettent d'obtenir en sortie des indicateurs relatifs à la capacité de l'engin à suivre l'itinéraire. En particulier, le programme d'ordinateur est conçu pour vérifier notamment si :
- la portance du sol est suffisante comparé au poids de l'engin,
- la géométrie des reliefs (pente, fossés, obstacles...) est compatible avec la garde au sol de l'engin, l'angle d'attaque, l'angle de fuite, l'aptitude en dévers, etc ...
- la profondeur d'un cours d'eau est inférieure à la profondeur maximale de gués,
- l'effort tracteur de l'engin est suffisamment important pour gravir les différentes côtes,
- le sol est suffisamment adhérent comparé au type de motricité, etc...

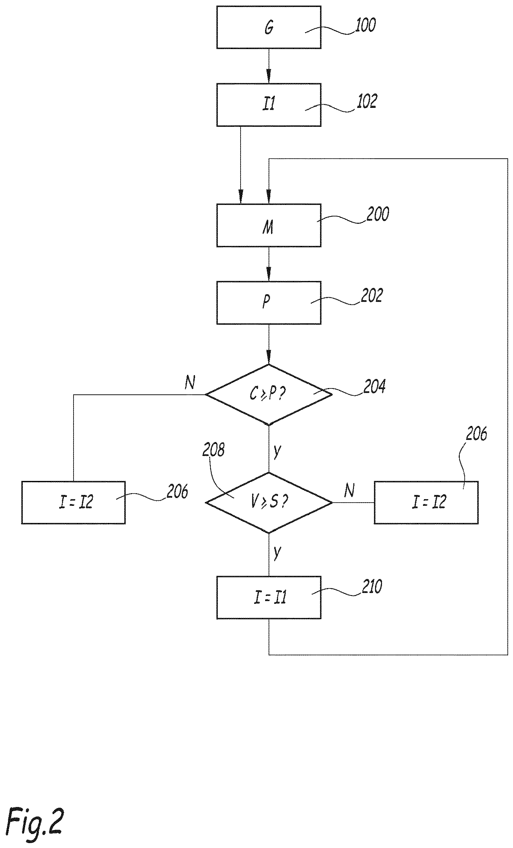

De manière astucieuse, si l'engin est capable de suivre l'itinéraire I1, c'est-à-dire s'il n'y a pas d'obstacle bloquant à contourner, le calculateur calcule la vitesse moyenne probable V de l'engin E sur la portion d'itinéraire s'étendant dans le champ de portée du véhicule de reconnaissance D. Cette portion d'itinéraire s'étend approximativement, dans l'exemple, sur 600m à partir de la position du véhicule de reconnaissance. Le calculateur compare alors, lors d'une étape 208, la vitesse moyenne probable V de l'engin E avec une valeur de vitesse seuil S. Si cette vitesse V est supérieure ou égale à la valeur de vitesse seuil S, alors l'itinéraire n'est pas modifié (I=I1), comme représenté par l'étape 210 à la figure 2. L'algorithme est ensuite réitéré.

Avantageusement, la valeur de vitesse seuil S peut être choisie entre 5 et 20km/h, par exemple de l'ordre de 10 km/h.

De manière alternative, la valeur de vitesse seuil S peut être choisie égale ou sensiblement égale à la vitesse estimée à l'origine, c'est-à-dire à la vitesse calculée à partir de l'analyse de terrain de niveau 1 pour la portion d'itinéraire considérée. On entend par l'expression « sensiblement » qu'une marge de tolérance peut être utilisée. Par exemple, la vitesse de vitesse seuil S peut être choisie 10% inférieure à la vitesse de passage calculée à partir de l'analyse de terrain de niveau 1. On accepte alors que l'engin E circule à une vitesse légèrement inférieure à ce qui était prévu lors du calcul de l'itinéraire.

En revanche, si la vitesse moyenne probable V de l'engin E sur la portion d'itinéraire concernée est inférieure à la valeur de vitesse seuil S, alors on estime que le terrain traversé par l'itinéraire I1 est en trop mauvais état et que suivre cet itinéraire I1 rallongerait trop le temps de trajet. Un nouvel itinéraire I2 est alors calculé (I=I2), lors d'une étape 206, jusqu'au point d'arrivée. La valeur seuil S peut être égale à la vitesse calculée à l'origine avec l'analyse de terrain de niveau 1.

En variante, le calculateur peut alors être utilisé pour déterminer si l'engin a des capacités de franchissement suffisantes pour suivre l'itinéraire avec différentes vitesses de franchissement supérieures ou égales à au moins une valeur de vitesse seuil (le calculateur définit les vitesses de consigne de franchissement) et, à défaut, pour établir un nouvel itinéraire I2 jusqu'au point d'arrivée à partir des données cartographiques et/ou des valeurs de paramètres P relatifs à la traficabilité du terrain.

Ainsi, plusieurs valeurs de vitesse seuil S sont déterminées tout au long de l'itinéraire I1. Chaque valeur de vitesse seuil est sensiblement égale à une vitesse de passage déterminée à partir des données cartographiques et/ou au moins un tracé d'itinéraire connu.

Cela signifie que le calculateur est utilisé pour déterminer si l'engin E a des capacités de franchissement suffisantes pour suivre l'itinéraire I1 avec au moins une vitesse de franchissement V supérieure ou égale à au moins une valeur de vitesse seuil S et, à défaut, pour établir (étape 206) un nouvel itinéraire I2 jusqu'au point d'arrivée B à partir des données cartographiques et/ou des valeurs de paramètres P relatifs à la traficabilité du terrain.

Comme l'itinéraire initial I1, le nouvel itinéraire I2 est calculé à partir des données cartographiques (niveau 1) et, éventuellement à partir des valeurs de paramètres P relatifs à la traficabilité du terrain (niveau 2) calculées grâce aux mesures du véhicule de reconnaissance D. Effectivement, le véhicule de reconnaissance D peut être commandé pour aller explorer une zone non traversée par l'itinéraire initial.

Le nouvel itinéraire I2 est transmis par le calculateur au système GPS (Global positioning system) de l'engin. Dans l'exemple représenté à la figure 1, l'engin ne rencontre qu'un seul obstacle O et l'itinéraire n'est donc recalculé qu'une fois. Toutefois, en pratique, l'itinéraire est recalculé autant de fois qu'un obstacle infranchissable ou difficilement franchissable est détecté sur l'itinéraire de l'engin E. Grâce à cette méthode, tout obstacle O présent sur la trajectoire de l'engin E peut être anticipé et contourné facilement (sans manœuvre) par une actualisation de l'itinéraire.

Avantageusement, l'engin E est également équipé de moyens de mesure embarqués. Ces moyens de mesure peuvent comprendre au moins l'un des éléments suivants :
- une caméra thermique,
- une caméra multi-spectrale,
- un radar laser (lidar), adapté pour émettre un faisceau laser,
- un radar, adapté pour émettre des ondes électromagnétiques,
- une caméra standard.

Les moyens de mesure embarqués sur l'engin E peuvent être utilisés pour comparer les valeurs de paramètres relatifs à la traficabilité du terrain, établies grâce au drone D, avec la traficabilité réelle du terrain. Par exemple, la caméra embarquée sur l'engin E peut être agencée pour estimer l'enfoncement de l'engin E dans le sol à partir des traces des pneus ou des chenilles, ce qui permet de calculer la portance du sol sur la base du poids de l'engin. Il est alors possible de calculer un coefficient correcteur à appliquer aux données relevées par le véhicule de reconnaissance D pour affiner le Modèle Numérique de Terrain Dynamique (MNT-D) établi grâce au véhicule de reconnaissance. Ce coefficient correcteur est calculé à partir de données extraites sur une ou plusieurs dizaines, voire une ou plusieurs centaines de trajets. Le coefficient correcteur a pour finalité de corriger les mesures du véhicule de reconnaissance grâce à un retour d'expérience sur un ou des trajets précédents. Notamment, cela permet de constituer, au fur et à mesure des missions, typiquement des missions militaires, une base de données d'apprentissage. Ces données sont en pratique utilisées comme paramètres d'entrée dans des algorithmes bien particuliers, que l'on peut qualifier d'algorithmes de « machine learning », lesquels permettent d'optimiser la mesure des paramètres P relatifs à la traficabilité.

Ainsi, les valeurs de paramètres relatifs à la traficabilité du terrain sont corrigées et se rapprochent davantage de la réalité.

Les moyens de mesure embarqués sur l'engin peuvent également être utilisés pour la détection d'obstacle à proximité immédiate de l'engin E. En particulier, de tels moyens de mesure peuvent être utilisés dans le cas où les données relevées par le drone D, telles que les données relatives aux caractéristiques du terrain (compacité, portance, adhérence, etc...), ne sont pas assez fiables, du fait par exemple d'un terrain de nature très complexe ou de la présence d'une végétation dense (forêt). On parle d'une analyse de terrain de niveau 3. L'analyse de terrain de niveau 3 peut être aussi utilisée pour contourner un nouvel obstacle imprévu, tel qu'un arbre couché sur la voie, non détecté par le véhicule de reconnaissance D sans nécessairement changer d'itinéraire ou pour contourner ou franchir un obstacle déjà détecté par le véhicule de reconnaissance D mais pour lequel la position doit être plus exactement déterminée pour permettre son contournement ou son franchissement. Il s'agit donc d'une prise en compte du terrain très localisée devant ou autour de l'engin E.

A titre de variante non représentée, la zone de franchissement G et l'itinéraire d'origine I1 sont également calculés, en plus des données cartographiques, en fonction de données tactiques. Ces données tactiques incluent notamment des indicateurs relatifs à :
- la position des bases/troupes alliés et la position des bases/troupes ennemis,
- les axes de pénétration,
- les tirs fratricides le cas échéant, et
- les lignes de contact.

Les données tactiques sont extraites à partir d'un système de gestion tactique ou en anglais « Battle Management System » (BMS). Les données tactiques peuvent être considérées comme primordiales pour le calcul de l'itinéraire. L'itinéraire correspond alors à un itinéraire à moindre risque tactique, c'est-à-dire à un itinéraire où l'engin est le moins exposé aux tirs ennemis/alliés, aux champs de mines, ou encore aux embuscades.

Selon une autre variante, chacun des paramètres de franchissement de l'engin n'est pas stocké en mémoire mais est communiqué par l'engin à un calculateur externe au véhicule.

Selon une autre variante non représentée, le calculateur est embarqué sur le véhicule de reconnaissance D.

Selon une autre variante, l'analyse de terrain de niveau 3 est également prise en compte lors du calcul de chaque nouvel itinéraire.

Selon une autre variante, l'itinéraire n'est modifié selon une étape 206 que si le véhicule de reconnaissance détecte un obstacle bloquant sur le trajet. En d'autres termes, l'itinéraire n'est pas modifié tant que l'engin E arrive à franchir, même s'il doit pour cela adopter une vitesse très faible. Cela signifie que l'étape 208 est optionnelle. Toutefois, la vitesse de l'engin E, si ce dernier est autonome, sera adaptée en fonction de l'analyse de terrain de niveau 2, et notamment diminuée automatiquement pour franchir un obstacle imprévu, tel qu'un éboulement ou un arbre couché sur la voie.

Selon une autre variante, l'itinéraire I1 peut être établi manuellement par un utilisateur, tel que le chauffeur de l'engin E. Pour cela, l'utilisateur sélectionne des points de cheminement, ou « waypoints » an anglais, c'est-à-dire des points de route à atteindre pour parvenir jusqu'au point d'arrivée B. Le logiciel peut alors vérifier si l'itinéraire établi par l'utilisateur fait partie des trajectoires inclues dans la zone de franchissement G calculée en parallèle. Si tel est le cas, l'itinéraire établi manuellement est maintenu. En revanche, si l'itinéraire établi par l'utilisateur ne fait pas intégralement partie de la zone de franchissement G, alors le calcule un nouvel itinéraire de départ I1. Il est à noter que s'il n'est pas possible d'établir une zone de franchissement, c'est-à-dire si l'on ne dispose pas de données cartographiques, ou du moins pas de données cartographiques exploitables dans la zone concernée, alors l'itinéraire établi manuellement par l'utilisateur est automatiquement maintenu.

Selon une autre variante, dans le cas où les données cartographiques dans la zone concernée sont inexistantes ou inexploitables, l'itinéraire de départ I1 est calculé sur la base d'une droite reliant les points A et B. L'itinéraire pourra toutefois être modifié en cours de route sur la base des mesures effectuées par le véhicule de reconnaissance D (Analyse de terrain de niveau 2), c'est-à-dire des valeurs de paramètres P relatifs à la traficabilité du terrain.

Les caractéristiques du mode de réalisation et des variantes envisagées ci-dessus peuvent être combinées entre elles pour générer de nouveaux modes de réalisation de l'invention, dans les limites de l'étendue fixées par les revendications annexées.

## Revendications

1. Méthode de calcul d'un itinéraire (I1, I2) pour un engin tout terrain (E), cette méthode comprenant une étape préliminaire consistant à :
a) établir (100, 102) un itinéraire (I1) à suivre par l'engin (E) pour aller d'un point de départ (A) à un point d'arrivée (B),
l'engin (E) étant précédé, tout au long du trajet entre le point de départ et le point d'arrivée, par un véhicule de reconnaissance sans personne à bord (D), comprenant des moyens de mesure embarqués,
la méthode comprenant des étapes itératives mises en oeuvre tout au long du trajet et consistant à :
b) transmettre des mesures (M) effectuées par le véhicule de reconnaissance (D) à un calculateur,
c) utiliser un programme d'ordinateur préenregistré dans le calculateur pour :
i. calculer (202) des valeurs de paramètres (P) relatifs à la traficabilité du terrain à partir des mesures effectuées par le véhicule de reconnaissance,
le calculateur comprenant une mémoire dans laquelle est stocké au moins un paramètre représentatif des capacités de franchissement (C) de l'engin tout terrain (E) suivant l'itinéraire (I1),
**caractérisée en ce que** l'étape c) comprend d'utiliser le programme d'ordinateur préenregistré dans le calculateur pour :
ii. comparer (204) les valeurs de paramètres relatifs à la traficabilité du terrain avec les capacités de franchissement (C) de l'engin (E), et déterminer (204) si l'engin a des capacités de franchissement suffisantes pour être capable de suivre l'itinéraire (I1), lequel est imposé pour un engin autonome, mais seulement recommandé pour un engin avec chauffeur, le programme d'ordinateur ayant pour paramètres d'entrée les valeurs de paramètres (P) relatifs à la traficabilité du terrain et les capacités de franchissement (C) de l'engin (E) et permettant d'obtenir en sortie des indicateurs relatifs à la capacité de l'engin à suivre l'itinéraire,
iii. si l'engin a des capacités de franchissement suffisantes, conserver (210) le même itinéraire (I1), et
iv. si les capacités de franchissement (C) de l'engin sont insuffisantes, établir (206) un nouvel itinéraire (I2) jusqu'au point d'arrivée (B) à partir de données cartographiques et/ou des valeurs de paramètres (P) relatifs à la traficabilité du terrain.

2. Méthode selon la revendication 1, **caractérisée en ce que**, lors de l'étape c), le calculateur est utilisé pour déterminer si l'engin (E) a des capacités de franchissement suffisantes pour suivre l'itinéraire (I1) avec une vitesse de franchissement (V) supérieure ou égale à une valeur de vitesse seuil (S) ou avec différentes vitesses de franchissement (V) supérieures ou égales à au moins une valeur de vitesse seuil (S) et, à défaut, pour établir (206) un nouvel itinéraire jusqu'au point d'arrivée à partir des données cartographiques et/ou des valeurs de paramètres (P) relatifs à la traficabilité du terrain.

3. Méthode selon la revendication 1 ou 2, **caractérisée en ce que**, lors de l'étape a), des données cartographiques et/ou au moins un tracé d'itinéraire connu sont utilisés pour déterminer différentes vitesses de passage de l'engin (E) tout au long de l'itinéraire (I1).

4. Méthode selon les revendications 2 et 3, **caractérisée en ce que** plusieurs valeurs de vitesse seuil (S) sont déterminées tout au long de l'itinéraire (I1) et **en ce que** chaque valeur de vitesse seuil est sensiblement égale à une vitesse de passage déterminée à l'étape a).

5. Méthode selon l'une des revendications précédentes, **caractérisée en ce que** l'engin tout terrain (E) est également équipé de moyens de mesure embarqués, utilisés pour comparer les valeurs de paramètres relatifs à la traficabilité du terrain avec la traficabilité réelle du terrain.

6. Méthode selon la revendication 5, **caractérisée en ce que**, lors de l'étape c), les valeurs de paramètres relatifs à la traficabilité du terrain sont pondérées avec un coefficient correcteur, calculé pour affiner la différence entre les valeurs de paramètres relatifs à la traficabilité du terrain et d'autres valeurs de paramètres relatifs à la traficabilité du terrain calculés à partir des mesures effectuées par les moyens de mesure embarqués sur l'engin tout terrain (E).

7. Méthode selon la revendication 6, **caractérisée en ce que** le coefficient correcteur est calculé à partir de données extraites sur au moins une ou plusieurs dizaines de trajets afin de corriger les mesures du véhicule de reconnaissance (D) grâce à un retour d'expérience sur des trajets précédents.

8. Méthode selon l'une des revendications précédentes, **caractérisée en ce que** le véhicule de reconnaissance sans personne à bord est un drone (D).

9. Méthode selon l'une des revendications précédentes, **caractérisée en ce que** le calculateur est déporté de l'engin tout terrain (E) et transmet le nouvel itinéraire (I2) à un système de GPS embarqué sur l'engin.

10. Méthode selon l'une des revendications précédentes, **caractérisée en ce que**, à l'étape a), l'itinéraire (I1) est établi à partir de données cartographiques et/ou au moins un tracé d'itinéraire connu.

11. Méthode selon l'une des revendications précédentes, **caractérisée en ce que** les valeurs de paramètres (P) relatifs à la traficabilité du terrain incluent des caractéristiques morphologiques du terrain, comme par exemple la teneur en argile, la teneur en eau, ou encore la composition du sol et/ou des caractéristiques géométriques du terrain, comme par exemple les reliefs, les obstacles, ou encore la granulométrie et/ou des propriétés mécaniques du terrain, comme par exemple la portance ou l'adhérence.

12. Méthode selon l'une des revendications précédentes, **caractérisée en ce que** le véhicule de reconnaissance (D) est équipé de moyens de mesure embarqués, qui comprennent au moins les trois éléments suivants :
- une caméra hyper-spectrale pour déterminer le type de végétation au sol,
- un Lidar pour détecter les reliefs, et
- un géoradar pour évaluer la compacité du sol et le cône index (Cl).

## Patentansprüche

1. Verfahren zur Berechnung einer Fahrstrecke (I1, I2) für ein Geländegerät (E), wobei dieses Verfahren einen einleitenden Schritt umfasst, der darin besteht:
a) eine Fahrstrecke (!1), der das Gerät (E) folgen soll, um von einem Ausgangspunkt (A) zu einem Ankunftspunkt (B) zu fahren, festzulegen (100, 102),
wobei dem Gerät (E) entlang der gesamten Route zwischen dem Ausgangspunkt und dem Ankunftspunkt ein unbemanntes Aufklärungsfahrzeug (D) vorausgeht, das Onboard-Messmittel umfasst,
wobei das Verfahren iterative Schritte, die entlang der gesamten Route umgesetzt werden, umfasst, und die darin bestehen:
b) Messungen (M), die von dem Aufklärungsfahrzeug (D) ausgeführt werden, zu einem Rechner zu übertragen,
c) ein in dem Rechner zuvor gespeichertes Computerprogramm dazu zu verwenden:
i. Parameterwerte (P) im Zusammenhang mit der Befahrbarkeit des Geländes ausgehend von den von dem Aufklärungsfahrzeug ausgeführten Messungen zu berechnen (202),
wobei der Rechner einen Speicher umfasst, in dem mindestens ein Parameter gespeichert ist, der für die Geländegängigkeit (C) des Off-Road-Geräts (E) repräsentativ ist, das der Fahrstrecke (I1) folgt,
**dadurch gekennzeichnet, dass** der Schritt c) das Verwenden des in dem Rechner zuvor gespeicherten Computerprogramms umfasst:
ii. um die Parameterwerte im Zusammenhang mit der Befahrbarkeit des Geländes mit der Geländegängigkeit (C) des Geräts (E) zu vergleichen (204), und zu bestimmen (204), ob das Gerät ausreichend Geländegängigkeit aufweist, um fähig zu sein, der Fahrstrecke (I1) zu folgen, die für ein selbstfahrendes Gerät vorgeschrieben, aber nur für ein Gerät mit Fahrzeugführer empfohlen ist, wobei das Computerprogramm als Eingangsparameter Parameterwerte (P) im Zusammenhang mit der Befahrbarkeit des Geländes und der Geländegängigkeit (C) des Geräts (E) aufweist, und die es erlauben, am Ausgang Indikatoren im Zusammenhang mit der Fähigkeit des Geräts, der Route zu folgen, zu erhalten,
iii. falls das Gerät ausreichend Geländegängigkeit aufweist, die gleiche Fahrstrecke (I1) beizubehalten (210), und
iv. falls die Geländegängigkeit (C) des Geräts unzureichend ist, eine neue Fahrstrecke (I2) bis zu dem Ankunftspunkt (B) ausgehend von kartographischen Daten und/oder Parameterwerten (P) im Zusammenhang mit der Befahrbarkeit des Geländes festzulegen.

2. Verfahren nach Anspruch 1, **dadurch gekennzeichnet, dass**, wenn bei dem Schritt c) der Rechner verwendet wird, um zu bestimmen, ob das Gerät (E) ausreichende Geländegängigkeit aufweist, um der Fahrstrecke (I1) mit einer Überfahrgeschwindigkeit (V), die größer oder gleich einem Geschwindigkeitsschwellenwert (S) ist, oder mit unterschiedlichen Überfahrgeschwindigkeiten (V), die größer oder gleich mindestens einem Geschwindigkeitsschwellenwert (S) sind, zu folgen, und anderenfalls um eine neue Route bis zu dem Ankunftspunkt ausgehend von den kartographischen Daten und/oder den Parameterwerten (P) im Zusammenhang mit der Befahrbarkeit des Geländes festzulegen (206).

3. Verfahren nach Anspruch 1 oder 2, **dadurch gekennzeichnet, dass** bei dem Schritt a) kartographische Daten und/oder mindestens ein bekannter Fahrstreckenverlauf verwendet werden, um unterschiedliche Durchfahrgeschwindigkeiten des Geräts (E) entlang der gesamten Fahrstrecke (I1) zu bestimmen.

4. Verfahren nach einem der Ansprüche 2 und 3, **dadurch gekennzeichnet, dass** mehrere Geschwindigkeitsschwellenwerte (S) entlang der gesamten Fahrstrecke (I1) bestimmt werden, und dass jeder Geschwindigkeitsschwellenwert im Wesentlichen gleich einer bei dem Schritt a) bestimmten Durchfahrgeschwindigkeit ist.

5. Verfahren nach einem der vorstehenden Ansprüche, **dadurch gekennzeichnet, dass** das Geländegerät (E) auch mit Onboard-Messmitteln ausgestattet ist, die verwendet werden, um die Parameterwerte im Zusammenhang mit der Befahrbarkeit des Geländes mit der realen Befahrbarkeit des Geländes zu vergleichen.

6. Verfahren nach Anspruch 5, **dadurch gekennzeichnet, dass** bei dem Schritt c) die Parameterwerte im Zusammenhang mit der Befahrbarkeit des Geländes mit einem Korrekturkoeffizienten gewichtet werden, der berechnet wird, um den Unterschied zwischen den Parameterwerten im Zusammenhang mit der Befahrbarkeit des Geländes und anderen Parameterwerten im Zusammenhang mit der Befahrbarkeit des Geländes, die ausgehend von den Messungen, die von den Onboard-Messmitteln auf dem Geländegerät (E) berechnet werden, zu verfeinern.

7. Verfahren nach Anspruch 6, **dadurch gekennzeichnet, dass** der Korrekturkoeffizient ausgehend von Daten berechnet wird, die aus mindestens einem oder mehreren Zehnern von Routen extrahiert werden, um die Messungen des Aufklärungsfahrzeugs (D) dank eines Erfahrungsrückflusses der vorhergehenden Routen zu korrigieren.

8. Verfahren nach einem der vorstehenden Ansprüche, **dadurch gekennzeichnet, dass** das unbemannte Aufklärungsfahrzeug eine Drohne (D) ist.

9. Verfahren nach einem der vorstehenden Ansprüche, **dadurch gekennzeichnet, dass** der Rechner von dem Geländegerät (E) entfernt ist und die neue Fahrstrecke (I2) zu einem Onboard-GPS auf dem Gerät überträgt.

10. Verfahren nach einem der vorstehenden Ansprüche, **dadurch gekennzeichnet, dass** die Fahrstrecke (I1) bei dem Schritt a) ausgehend von kartographischen Daten und/oder mindestens einem bekannten Fahrstreckenverlauf festgelegt wird.

11. Verfahren nach einem der vorstehenden Ansprüche, **dadurch gekennzeichnet, dass** die Parameterwerte (P) im Zusammenhang mit der Befahrbarkeit des Geländes morphologische Merkmale des Geländes beinhalten, wie zum Beispiel den Lehmgehalt, den Wassergehalt oder auch die Zusammensetzung des Bodens, und/oder geometrische Merkmale des Geländes, wie zum Beispiel die Reliefs, die Hindernisse oder die Granulometrie und/oder die mechanischen Eigenschaften des Geländes, wie zum Beispiel die Tragfähigkeit oder die Haftung.

12. Verfahren nach einem der vorstehenden Ansprüche, **dadurch gekennzeichnet, dass** das Aufklärungsfahrzeug (D) mit Onboard-Messmitteln, die mindestens die drei folgenden Elemente umfassen, ausgestattet ist:
- eine Hyper-Spektralkamera zum Bestimmen des Vegetationstyps auf dem Boden,
- ein Lidar zum Erfassen der Reliefs, und
- ein Georadar zum Bewerten der Kompaktheit des Bodens und des Cone-Index (CI).

## Claims

1. A method of calculating an itinerary (I1, I2) for an off-road vehicle (E), this method comprising a preliminary step consisting of:
a) establishing (100, 102) an itinerary (I1) to be followed by the vehicle (E) to go from a departure point (A) to an arrival point (B),
the vehicle (E) being preceded, throughout the entire journey between the departure point and the arrival point, by an unmanned reconnaissance vehicle (D), comprising onboard measuring means,
the method comprising iterative steps carried out throughout the entire journey and consisting of:
b) sending measurements (M) taken by the reconnaissance vehicle (D) to a computer,
c) using a computer program pre-stored in the computer to:
i. calculate (202) values of parameters (P) relative to the trafficability of the terrain from measurements done by the reconnaissance vehicle,
the computer comprises a memory in which is stored at least one parameter representative of the crossing capabilities (C) of the off-road vehicle (E) following the itinerary (I1),
**characterized in that** step c) comprises using the computer program pre-stored in the computer to :
ii. compare (204) the values of parameters relative to the trafficability of the terrain with the crossing capabilities (C) of the vehicle (E), and determine (204) whether the vehicle has sufficient crossing capabilities to be able to follow the itinerary (I1), which is mandatory for an autonomous vehicle, but only recommended for a vehicle with a driver, the computer program having, as input parameters, the parameter P values relative to the trafficability of the terrain and the crossing capacities (C) of the vehicle (E) and enabling to obtain, as output, indicators relative to the capacity of the vehicle to follow the itinerary,
iii. if the vehicle has sufficient crossing capabilities, keep (210) the same itinerary (I1), and
iv. if the crossing capabilities (C) of the vehicle are insufficient, establish (206) a new itinerary (I2) to the arrival point (B) from cartographical data and/or values of parameters (P) relative to the trafficability of the terrain.

2. The method according to claim 1, **characterized in that**, during step c), the computer is used to determine whether the vehicle (E) has sufficient crossing capabilities to follow the itinerary (!1) with a crossing speed (V) greater than or equal to a threshold speed value (S) or with different crossing speeds (V) greater than or equal to at least one threshold speed value (S) and, if not, to establish (206) a new itinerary to the arrival point from the cartographical data and/or the values of parameters (P) relative to the trafficability of the terrain.

3. The method according to claim 1 or 2, **characterized in that**, during step a), the cartographical data and/or at least one known itinerary outline are used to determine different passage speeds of the vehicle (E) along the entire itinerary (11).

4. The method according to claims 2 and 3, **characterized in that** several threshold speed values (S) are determined along the itinerary (I1), and **in that** each threshold speed value is substantially equal to a passage speed determined in step a).

5. The method according to one of the preceding claims, **characterized in that** the off-road vehicle (E) is also equipped with onboard measuring means, used to compare the values of parameters relative to the trafficability of the terrain with the actual trafficability of the terrain.

6. The method according to claim 5, **characterized in that**, during step c), the values of parameters relative to the trafficability of the terrain are weighted with the correction coefficient, calculated to refine the difference between the values of parameters relative to the trafficability of the terrain and other values of parameters relative to the trafficability of the terrain calculated from measurements done by the measuring means on board the off-road vehicle (E).

7. The method according to claim 6, **characterized in that** the correction coefficient is calculated from data extracted from at least one or several tens of journeys in order to correct the measurements of the reconnaissance vehicle (D) owing to feedback from previous journeys.

8. The method according to one of the preceding claims, **characterized in that** the unmanned reconnaissance vehicle is a drone (D).

9. The method according to one of the preceding claims, **characterized in that** the computer is not on board the off-road vehicle (E) and sends the new itinerary (I2) to a GPS system on board the vehicle.

10. The method according to one of the preceding claims, **characterized in that**, in step a), the itinerary (I1) is established from cartographical data and/or at least one known itinerary outline.

11. The method according to one of the preceding claims, **characterized in that** the values of the parameters (P) relative to the trafficability of the terrain include morphological characteristics of the terrain, for example the clay content, water content or soil composition, and/or geometric characteristics of the terrain, for example reliefs, obstacles, or particle size distribution, and/or mechanical properties of the terrain, for example the load-bearing capacity or grip.

12. The method according to one of the preceding claims, **characterized in that** the reconnaissance vehicle (D) is equipped with on board measuring means, which comprise at least the following three elements:
- a hyperspectral camera to determine the type of vegetation on the ground,
- a Lidar to detect reliefs, and
- a geo-radar to assess the compactness of the soil and the cone index (CI).
